# DEMANDE DE BREVET EUROPEEN

(11) **EP 4 831 756 A1**
(43) Date de publication de la demande: **28.10.2026**
(21) Numéro de dépôt: 26173393.5
(22) Date de dépôt: 20.04.2026
(51) Int. Cl.: G05B 19/042, G06F 16/23, G06F 16/2458

(54) **PUCE D'ACCOMPAGNEMENT POUR LA DÉTECTION DE DÉRIVE DE DONNÉEES DE SERIES TEMPORELLES**

(30) Priorité: 24.04.2025 FR 2504369
(71) Demandeur: Commissariat à l'Energie Atomique et aux Energies Alternatives, 75015 Paris (FR)
(72) Inventeur: GIRAUD, Bastien, 38054 Grenobe cedex 09 (FR); PHILIPPE, Anthony, 38054 Grenobe cedex 09 (FR); NOEL, Jean-Philippe, 38054 Grenobe cedex 09 (FR)
(74) Mandataire: Cabinet Beaumont

(57) **Abrégé**

La présente description concerne une puce de circuits intégrés (CC). Une interface (300) reçoit des premières données de séries temporelles (data1) d'un capteur (S), et une deuxième interface (302) fournit, à partir des premières données, des deuxièmes données de séries temporelles (data1b) à un circuit numérique, le circuit numérique fournissant, à partir des deuxièmes données, des troisièmes données de séries temporelles (data2) à un modèle numérique (NUM). La puce enregistre des premières données de séries temporelles (data1) reçues pendant une fenêtre temporelle glissante dans une mémoire non volatile de la puce, détecte que des premières données de séries temporelles (data1) s'écartent de données de séries temporelles de calibration et enregistre des informations de la détection dans sa mémoire non volatile.

## Description

### Domaine technique

La présente description concerne de façon générale les systèmes électroniques embarqués comprenant au moins un capteur de séries temporelles pour surveiller ("to monitor" en anglais) un élément comme, par exemple, un moteur.

### Technique antérieure

Un capteur de séries temporelles est un capteur configuré pour fournir des données de séries temporelles d'une grandeur mesurée par le capteur. Les données d'une série temporelle correspondent à une suite de valeurs de la grandeur mesurée, par exemple à intervalles réguliers, par le capteur, et représentent l'évolution de cette grandeur en fonction du temps. La grandeur est, par exemple, l'humidité, la température, une accélération, ...

Des systèmes électroniques embarqués connus comprennent chacun au moins un capteur de séries temporelles configuré pour fournir des données de séries temporelles d'une grandeur physique lié à un élément surveillé par le système embarqué, et un circuit numérique configuré pour recevoir les données de séries temporelles fournies par le ou les capteurs du système. Le circuit numérique fournit alors ces données de séries temporelles, avec ou sans traitement préalable, à un modèle numérique de l'élément observé par le système embarqué. Ce modèle numérique est mis en œuvre, c'est à dire déployé, dans le circuit numérique ou dans un serveur local ou distant auquel le circuit numérique transfert les données de séries temporelles. Le circuit numérique est un circuit de contrôle (ou contrôleur), par exemple un micro-contrôleur ou un FPGA (de l'anglais "Field-Programmable Gate Array" - matrice de portes programmables).

Un tel système embarqué permet de traiter les données de séries temporelles avec le modèle numérique pour déterminer l'état de l'élément surveillé, par exemple pour détecter un disfonctionnement de cet élément ou pour prendre des décisions sur le contrôle de cet élément.

A titre d'exemple, le modèle numérique est obtenu par apprentissage profond supervisé en utilisant des données de séries temporelles de calibration. A titre d'autre exemple, le modèle numérique est un jumeau numérique de l'élément observé, c'est à dire une représentation du modèle sous la forme d'un ensemble de règles définies à partir de données de séries temporelles de calibration. Dans tous les cas, le modèle numérique est défini, ou construit, à partir des données de séries temporelles de calibration.

Dans un tel système embarqué, les données de séries temporelles fournies au circuit de contrôle par le ou les capteurs du système peuvent ne pas être conformes aux données de calibration, c'est à dire qu'elles peuvent s'écarter des données de calibration. On parle alors de dérive de données ("data drift" en anglais), qui va entraîner un mauvais fonctionnement du système embarqué, par exemple car le circuit de contrôle ou le système embarqué va produire des résultats faux concernant l'état de l'élément surveillé par le système.

Une dérive de données résulte, par exemple, d'un manque de données fournies par le ou les capteurs, ou d'anomalies résultant de perturbations environnementales, ou encore de conditions de fonctionnement de l'élément qui n'étaient pas connues ou prises en compte lors de la production des données de séries temporelles de calibration ayant servi à la définition du modèle.

Dans un tel système embarqué, le circuit de contrôle reçoit directement les données de séries temporelles depuis le ou les capteurs du système, qui gère donc le transfert des données de séries temporelles vers le modèle numérique. La mise en œuvre d'une fonction de détection de dérive de données par le circuit de contrôle monopolise les ressources du circuit de contrôle qui doit en outre gérer les transferts de données de séries temporelles du ou des capteurs vers le modèle numérique. Il en résulte des latences dans le traitement des données de séries temporelles, et, par exemple, une faible efficacité énergétique du fait que le circuit de contrôle est sollicité en permanence. On pourrait penser à augmenter la capacité de traitement du circuit de contrôle, mais cela conduirait à augmenter la complexité et le coût de ce circuit, et donc du système embarqué.

### Résumé de l'invention

Il existe un besoin pour un système embarqué qui pallie tout ou partie des inconvénients des systèmes embarqués connus décrits ci-dessus.

Il existe un besoin pour un système embarqué qui pallie tout ou partie des inconvénients des systèmes embarqués connus décrits ci-dessus, par exemple en ce qui concerne la détection que les données de séries temporelles provenant du ou des capteurs du système s'écartent de données de séries temporelles de calibration utilisées pour déterminer (ou configurer, ou définir) le modèle numérique déployé dans le système embarqué.

Un mode de réalisation pallie tout ou partie des inconvénients des systèmes embarqués connus décrits ci-dessus. Par exemple, un mode de réalisation prévoit une puce de circuits intégrés destinée à être implémentée dans un système embarqué tel que décrit ci-dessus, la puce étant configurée pour recevoir les données de séries temporelles des capteurs et les transmette, avec ou sans traitement, au de contrôle numérique qui a son tour transmet les données de séries temporelles, avec ou sans traitement, à un modèle numérique déployé dans ce circuit de contrôle ou dans un serveur distant ou local. Cette puce assure l'enregistrement des données de série temporelles provenant des capteurs dans une mémoire non volatile de la puce. Cette puce est également configurée pour mettre en œuvre une fonction de détection de dérive de données.

Un mode de réalisation prévoit une puce de circuits intégrés comprenant :
une première interface configurée pour recevoir des premières données de séries temporelles d'au moins un capteur ;
une deuxième interface configurée pour fournir des deuxièmes données de séries temporelles à un circuit numérique configuré pour fournir des troisièmes données de séries temporelles à un modèle numérique d'au moins un élément surveillé par ledit au moins un capteur ; et
une mémoire non volatile. Les deuxièmes données de séries temporelles sont déterminées par les premières données de séries temporelles. Les troisièmes données de séries temporelles sont déterminées par les deuxièmes données de séries temporelles. La puce de circuits intégrés est configurée pour mettre en œuvre :
   - une fonction d'enregistrement des premières données de séries temporelles reçues pendant une fenêtre temporelle glissante dans une première zone mémoire de la mémoire non volatile,
   - une fonction de détection que des premières données de séries temporelles s'écartent de données de séries temporelles de calibration utilisées pour définir le modèle numérique,
   - une fonction d'enregistrement de résultats de la fonction détection dans une deuxième zone mémoire de la mémoire non volatile, et
   - une fonction d'enregistrement de quatrièmes données dans une troisième zone mémoire de la mémoire non volatile, les quatrièmes données étant déterminées par des premières données de séries temporelles détectées comme s'écartant des données de séries temporelles de calibration. La puce de circuits intégrés comprend une interface de programmation des fonctions de détection et d'enregistrement mises en œuvre par la puce de circuits intégrés.

Selon un mode de réalisation, la puce comprend un modèle de données déterminé par des propriétés statistiques sur l'ensemble ou un sous-ensemble des données de calibration.

Selon un mode de réalisation, la puce est configurée pour mettre en œuvre la fonction de détection en utilisant le modèle de données.

Selon un mode de réalisation, la puce est un circuit maitre dudit au moins un capteur.

Selon un mode de réalisation, la puce est un circuit esclave du circuit numérique.

Selon un mode de réalisation, la mémoire non volatile met en œuvre une mémoire de données pour le circuit numérique.

Selon un mode de réalisation :
- la puce de circuits intégrés est en outre configurée pour que les deuxièmes données de séries temporelles soient déterminées uniquement par les premières données de séries temporelles qui ne s'écartent pas des données de séries temporelles de calibration ; ou
- la puce de circuits intégrés est en outre configurée pour avertir le circuit numérique lorsque les deuxièmes données de séries temporelles sont déterminées par des premières données de séries temporelles s'écartant des données de séries temporelles de calibration.

Selon un mode de réalisation :
la puce de circuits intégrés est en outre configurée pour mettre en œuvre une fonction consistant à fournir au circuit numérique, dans un mode de test où la première interface est déconnectée dudit au moins un capteur, des deuxièmes données de séries temporelles supplémentaires déterminées par des données de séries temporelles de test enregistrées dans la mémoire non volatile ; et
la puce de circuits intégrés est configurée pour que ladite fonction soit programmée dans la puce de circuits intégrés via l'interface de programmation.

Selon un mode de réalisation, la puce de circuits intégrés est en outre configurée pour mettre en œuvre une fonction consistant à fournir au circuit numérique, dans un mode de test où la première interface est déconnectée dudit au moins un capteur, des deuxièmes données de séries temporelles supplémentaires générées à partir du modèle de données ; et
la puce de circuits intégrés est configurée pour que ladite fonction soit programmée dans la puce de circuits intégrés via l'interface de programmation.

Selon un mode de réalisation :
la puce de circuits intégrés est en outre configurée pour mettre en œuvre au moins l'une des fonctions suivantes :
   - suréchantillonner des valeurs des premières données de séries temporelles reçues par la première interface par rapport à une fréquence de transmission des premières données et/ou suréchantillonner des valeurs des deuxièmes données de séries temporelles fournies par la deuxième interface par rapport à une fréquence de transmission des deuxièmes données, et enregistrer les valeurs obtenues lorsque ces valeurs présentent un phénomène transitoire ; et
   - suréchantillonner des signaux numériques de la première interface par rapport à une fréquence d'un signal périodique de synchronisation de la première interface ou par rapport à des variations rapides de valeurs de tension analogiques desdits signaux numériques, et pour enregistrer des échantillons correspondant à un phénomène transitoire d'un protocole de communication de la première interface avec ledit au moins un capteur, et
la puce de circuits intégrés est configurée pour que ladite au moins une fonction soit programmée dans la puce de circuits intégrés via l'interface de programmation.

Selon un mode de réalisation :
la puce de circuits intégrés est en outre configurée pour mettre en œuvre au moins l'une des fonctions suivantes :
   - générer les deuxièmes données de séries temporelles à partir de premières données de séries temporelles d'au moins deux capteurs ; et
   - fournir au moins une partie des deuxièmes données de séries temporelles à un modèle numérique supplémentaire dudit au moins un élément, ledit modèle numérique supplémentaire étant enregistré dans ladite puce, et
la puce de circuits intégrés est configurée pour que ladite au moins une fonction soit programmée dans la puce de circuits intégrés via l'interface de programmation.

Selon un mode de réalisation :
la puce de circuits intégrés comprend une interface configurée pour recevoir du circuit numérique des données de résultat obtenues en fournissant les troisièmes données de séries temporelles au modèle numérique ;
la puce de circuits intégrés est configurée pour détecter une baisse de précision du modèle à partir des données de résultat ; et
la puce de circuits intégrés est configurée pour avertir le circuit numérique lors de la détection d'une baisse de précision.

Selon un mode de réalisation :
la première zone mémoire comprend au moins 60% de l'espace de stockage de la mémoire non volatile ; et/ou
la mémoire non volatile est configurée pour mettre en œuvre au moins 10⁷ cycles d'écriture, de préférence jusqu'à 10¹⁴ cycles d'écriture ; et/ou
la mémoire non volatile est de type ferroélectrique ou de type magnétique ; et/ou
la mémoire non volatile comprend au moins 32 Mbits de stockage.

Un autre mode de réalisation prévoit un système électronique comprenant :
la puce de circuits intégrés telle que définie ci-dessus ;
au moins un élément à observer ;
au moins un capteur configuré pour observer ledit au moins un élément et pour fournir les premières données de séries temporelles à la première interface de la puce ;
un circuit numérique configuré pour recevoir les deuxièmes données de séries temporelles et fournir les troisièmes données de séries temporelles au modèle numérique dudit au moins un élément.

Selon un mode de réalisation :
- le système comprend en outre un serveur dans lequel est enregistré le modèle numérique, le circuit numérique étant configuré pour fournir les troisièmes données de séries temporelles au serveur ; ou
- le modèle numérique est enregistré dans le circuit numérique, les troisièmes données de séries temporelles étant des données internes du circuit numérique.

Selon un mode de réalisation, le modèle numérique est un jumeau numérique défini à partir des données de calibration ou un modèle obtenu par apprentissage à partir des données de calibration.

Un autre mode de réalisation prévoir un produit programme d'ordinateur comprenant des instructions qui, lorsque le programme est exécuté par un ordinateur, conduisent à la programmation, dans la puce de circuits intégrés telle que définie ci-dessus, des fonctions mises en œuvre par la puce, via l'interface de programmation de la puce.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique et sous la forme de bloc, un exemple d'un système embarqué pour surveiller un élément ;
la figure 2 représente, de manière schématique et sous la forme de bloc, un autre exemple d'un système embarqué pour surveiller un élément ;
la figure 3 représente, de manière schématique et sous la forme de blocs, un exemple de mode de réalisation d'un système embarqué pour surveiller un élément ;
la figure 4 représente, de manière schématique et sous la forme de blocs, un exemple d'une variante de réalisation du système embarqué de la figure 3 ;
la figure 5 représente, de manière schématique et sous forme de blocs, un exemple de mode de réalisation d'un circuit d'accompagnement mis en œuvre dans le système embarqué des figures 3 et 4 ; et
la figure 6 représente, de manière schématique et sous forme de blocs, un exemple de mode de réalisation d'une mémoire non volatile du circuit de la figure 5.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les éléments connus pouvant être observés par un système embarqué et les techniques connues d'obtention de modèles numériques de ces éléments à partir de données de séries temporelles de calibration n'ont pas été décrites, les modes de réalisation et variantes décrits étant compatibles avec ces éléments connus et ces techniques connues.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

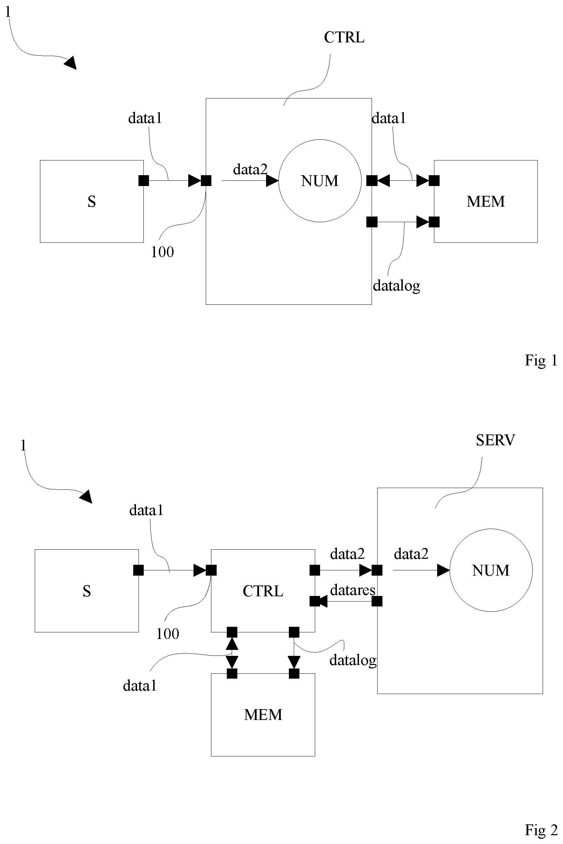

La figure 1 représente, de manière schématique et sous la forme de bloc, un exemple d'un système embarqué 1 pour l'observation d'un élément, par exemple un moteur, non représenté en figure 1.

Le système 1 comprend un ou plusieurs capteurs S, le système 1 de l'exemple de la figure 1 ne comprenant qu'un seul capteur S.

Chaque capteur S du système 1 est configuré pour observer un élément à surveiller, plusieurs capteurs S pouvant être dédiés à l'observation d'un même élément. Ainsi, chaque capteur S va mesurer une grandeur physique dont l'évolution dans le temps est déterminée par, ou représentative de, l'état de l'élément observé par ce capteur.

A titre d'exemple, la grandeur physique peut être la température de l'élément, la température de l'environnement de l'élément, l'humidité de l'environnement de l'élément, une vitesse d'écoulement d'un fluide dans l'élément, une vitesse ou un angle de rotation d'une partie de l'élément, une vitesse de déplacement ou une position d'une partie de l'élément, des vibrations (accélération) de toute ou partie de l'élément, une puissance consommée par l'élément, etc.

Chaque capteur S du système 1 est configuré pour fournir des données de séries temporelles data1, ces données data1 étant représentative de, ou déterminées par, l'évolution temporelle de la grandeur mesurée par le capteur S.

Le système 1 comprend en outre un circuit numérique CTRL. Le circuit CTRL est un circuit de contrôle (ou contrôleur), par exemple un micro-contrôleur ou un FPGA.

Le circuit CTRL est configuré, dans l'exemple de la figure 1, pour recevoir les données data1 provenant de chaque capteur S du système. Pour cela le circuit CTRL comprend une interface 100 configurée pour recevoir les données data1 d'au moins un capteur S. Par exemple, l'interface 100 peut recevoir les données de tous les capteurs S du système, ou, de manière alternative, le circuit CTRL peut comprendre plusieurs interfaces 100 chacune configurée pour recevoir les données data1 d'un ou plusieurs capteurs S du système.

Le circuit CTRL est configuré pour enregistrer les données data1 reçues dans une mémoire MEM du système 1. Le circuit CTRL est ensuite configuré pour transmettre les données data1, avec ou sans traitement préalable, à un modèle numérique NUM.

On appelle data2 les données de séries temporelles que le circuit CTRL transmet au modèle numérique NUM, que ces données data2 soient identiques aux données data1 reçues car le circuit CTRL n'a fait aucun traitement sur les données data1, ou que ces données data2 soient obtenues à partir des données data1 d'un ou plusieurs capteurs S, par exemple, car un traitement préalable a été appliqué par le circuit CTLR aux données data1 pour obtenir les données data2. Dans tous les cas, les données data2 sont déterminées par les données data1.

Dans l'exemple de la figure 1, le modèle NUM est déployé dans le circuit CTRL.

Le modèle numérique NUM traite les données data2 qu'il reçoit et fournit des résultats de traitement. Les résultats de traitement indiquent un état, ou l'évolution d'un état, de l'élément surveillé par le système.

Le circuit CTRL peut être configuré pour enregistrer, dans la mémoire MEM, tout ou partie des résultats de traitement des données data2 par le modèle numérique NUM. Ces résultats peuvent être enregistrés avec ou sans métadonnées, sous forme compressée ou non. Les résultats ainsi enregistrés sont référencés datalog en figure 1.

En pratique, dans le système 1, les capteurs S sont mis en œuvre par des puces de circuits intégrés correspondantes, le circuit CTRL est mis en œuvre par une puce de circuits intégrés distincte des celles des capteurs S, et la mémoire MEM est mis en œuvre par une puce de circuits intégrés distincte de celles des capteurs et du circuit CTRL.

Dans le système 1, lorsqu'une fonction de détection de dérive de données est mise en œuvre, c'est à dire lorsque le système 1 est configuré pour détecter si les données data1 s'écartent de, ou ne sont pas conforment aux, données de séries temporelles ayant été utilisées pour définir le modèle numérique NUM, cette fonction est mise en œuvre par le circuit CTRL. Ainsi, le circuit CTRL doit non seulement assurer l'enregistrement des données data1 et la fourniture des données data2 correspondantes au modèle NUM, mais aussi vérifier si les données data1 s'éloignent ou non des données de calibration du modèle NUM.

En plus de cela, le circuit CTRL peut avoir à enregistrer en mémoire MEM les résultats de détection que les données data1 s'éloignent des données de calibration, par exemple avec ou sans métadonnées, sous forme compressée ou non, sous la forme de données datalog.

Comme le circuit CTRL implémente en outre des fonctions qui ne sont pas liées directement à la surveillance de l'élément observé, il en résulte que les fonctions d'enregistrement de données de séries temporelles, de fourniture des données de séries temporelles correspondantes au modèle NUM, et de détection de dérive de données réduisent les ressources du circuit CTRL disponibles pour la mise en œuvre des autres fonctions du circuit CTRL. Les fonctions mises en œuvre par le circuit CTRKL peuvent alors présenter des latences de traitement. En outre, le circuit CTRL étant fortement monopolisé, il présente une faible efficacité énergétique, par exemple car il n'est jamais commuté dans un mode basse consommation.

La figure 2 représente, de manière schématique et sous la forme de bloc, un autre exemple du système embarqué 1.

Le système 1 de la figure 2 diffère de celui de la figure 1 en ce que le modèle NUM n'est pas déployé dans le circuit CTRL, mais dans serveur SERV, qui peut être un serveur local ou un serveur distant ("cloud" en anglais). Le serveur SERV et le circuit CTRL sont en communication l'un avec l'autre pour que le circuit CTRL fournisse les données data2 au serveur SERV qui les fournit à son tour au modèle NUM. Par ailleurs, des données, référencées datares en figure 2, résultant de l'application du modèle NUM aux données data2, sont fournies par le serveur SERV au circuit CTRL, qui peut alors enregistrer des données datalog correspondantes en mémoire MEM.

Dans le système 1 de la figure 2, le circuit CTRL est, comme en figure 1, responsable de l'enregistrement des données data1 en mémoire, de la fourniture des données data2 correspondantes au modèle NUM, et de la fonction de détection de dérive de données.

Le système 1 de la figure 2 souffre donc des mêmes inconvénients que le système 1 de la figure 1, en particulier en ce qui concerne l'utilisation des ressources du circuit CTRL pour mettre en œuvre les fonctions d'enregistrement en mémoire MEM des données data1, la production et la fourniture des données data2 au modèle NUM, et l'enregistrement des données datalog en mémoire MEM.

Il est ici proposé une puce de circuits intégrés qui est configurée pour être disposée entre le circuit CTRL et un ou des capteurs du système embarqué, de sorte à recevoir les données de séries temporelles de ces capteurs, les enregistrer dans une mémoire non volatile faisant partie de cette puce, fournir des données de séries temporelles correspondantes au circuit CTRL qui fournira des données de série temporelles correspondantes au modèle NUM, le modèle NUM étant déployé dans le circuit CTRL ou dans un serveur local ou distant. La puce est en outre configurée pour mettre en œuvre la fonction de détection de dérive de données, et, par exemple, l'enregistrement de résultats de détection dans sa mémoire non-volatile afin de permettre leur analyse par un opérateur ou utilisateur du système. La puce est, par exemple, appelée puce d'accompagnement ("companion chip" en anglais) et a pour rôle d'assister le circuit CTRL.

L'ajout de cette puce dans le système embarqué permet de ne pas avoir à modifier le circuit CTRL, et dans le même temps de réduire l'utilisation des ressources du circuit CTRL.

En particulier, la puce d'accompagnement pourra mettre en œuvre des fonctions de traitement des données data1 pour générer les données data2 fournies au modèle NUM.

Des exemples de modes de réalisation d'un système embarqué comprenant une telle puce vont maintenant être décrits.

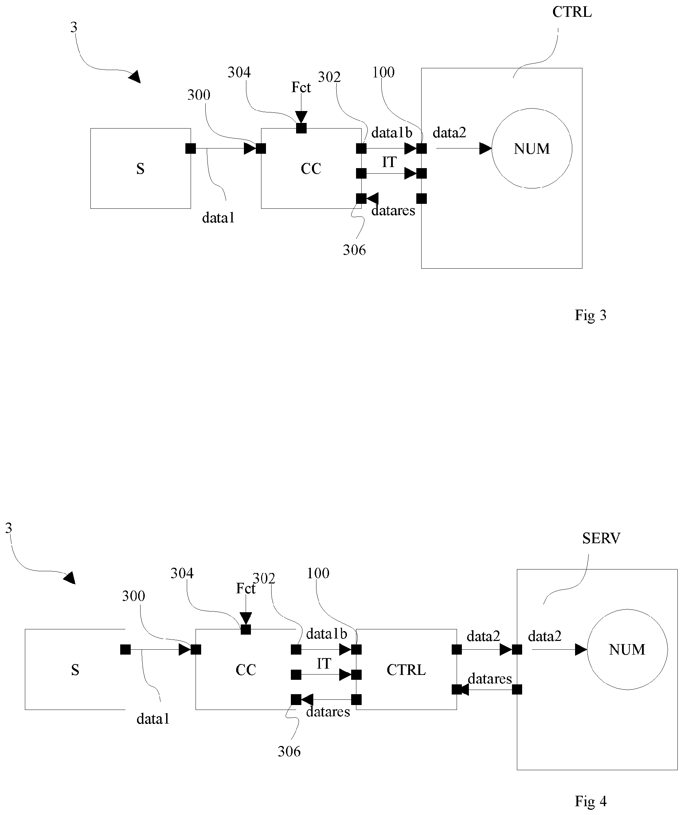

La figure 3 représente, de manière schématique et sous la forme de blocs, un exemple de mode de réalisation d'un système embarqué 3 pour l'observation d'un élément.

Le système embarqué 3 de la figure 3 comprend de nombreux éléments en commun avec le système embarqué 1 de la figure 1. Ainsi, sauf indication contraire, ce qui a été indiqué pour le système 1 s'applique au système 3. En particulier, seules les différences entre ces deux systèmes sont ici mises en exergue.

En plus d'un ou plusieurs capteur S et du circuit CTRL, le système 3 comprend une puce de circuits intégrés CC.

La puce CC comprend une interface 300 configurée pour recevoir les données data1 d'au moins un capteur S. Par exemple, l'interface 300 peut recevoir les données de tous les capteurs S du système 3, ou, de manière alternative, la puce CC peut comprendre plusieurs interfaces 300 chacune configurée pour recevoir les données data1 d'un ou plusieurs capteurs S du système.

La puce CC comprend en outre une interface 302 configurée pour fournir des données de séries temporelles data1b au circuit CTRL, les données data1b fournies au circuit CTRL de la figure 3 remplaçant les données data1 reçues par le circuit CTLR du système des figures 1 et 2.

Les données data1b sont, par exemple, identiques aux données data1 lorsque la puce CC n'effectue aucun traitement sur les données data1 avant de les transmettre au circuit CTRL. A titre d'exemple alternatif, la puce CC peut réaliser des traitements préalables sur les données data1 pour obtenir les données data1b transmises au circuit CTRL. Dans tous les cas les données data1b sont déterminées par les données data1 reçues, c'est à dire produites à partir de ces données data1 reçues. Dit encore autrement, les données data1b sont déterminées grâce aux données data1 reçues.

Comme dans le système 1 de la figure 1, lorsque le circuit CTRL reçoit les données data1b, il fournit des données correspondantes data2 au modèle numérique NUM. Les données data2 sont, par exemple, identiques aux données data1b lorsque le circuit CTRL n'effectue aucun traitement sur les données data1b avant de les transmettre au modèle numérique NUM. A titre d'exemple alternatif, le circuit CTRL peut réaliser des traitements préalables sur les données data1b pour obtenir les données data2 transmises au modèle NUM. Dans tous les cas les données data2 sont déterminées par les données data1b reçues, c'est à dire produites à partir de ces données data1b reçues.

Dans l'exemple de la figure 3, comme en figure 1, le modèle numérique NUM est déployé dans le circuit CTRL. Les données data2 sont donc des données internes du circuit CTRL dans cet exemple.

Bien que cela ne soit pas illustré en figure 3, la puce CC comprend une mémoire non volatile.

En effet, contrairement au système 1 où le circuit CTRL est responsable de l'enregistrement des données data1 dans la mémoire MEM, dans le système 3 les données data1 sont enregistrées par la puce CC, directement dans la mémoire non volatile de la puce.

Plus particulièrement, la puce CC enregistre, dans une première zone mémoire de sa mémoire non volatile, les données data1 correspondant à une fenêtre temporelle glissante. Dit autrement, la puce est configurée pour mettre en œuvre un tampon circulaire ("circular or rolling buffer" en anglais) pour les données data1 dans la première zone de sa mémoire non-volatile.

Ainsi, la fonction d'enregistrement des données data1 qui était dévolue au circuit CTRL du système 1 est, dans le système 3, mise en œuvre par la puce CC. Cela permet de libérer une partie des ressources du circuit CTRL du système 3 par rapport au circuit CTRL du système 1.

Dans le système 3, l'enregistrement des données data1 se fait dans une mémoire non volatile faisant partie de la puce CC, et non pas dans une mémoire externe MEM comme dans le système 1. Cela permet de minimiser le déplacement des données.

Par ailleurs, la puce CC est configurée pour détecter si les données data1 qu'elle reçoit sont conformes aux données de calibration utilisées pour définir le modèle NUM. Dit autrement, la puce CC est configurée pour détecter lorsque les données data1 s'écartent des données de calibration ayant servi à la définition du modèle NUM. Dit encore autrement, la puce CC est configurée pour détecter une dérive de données. A titre d'exemple, pour cela la puce CC peut mettre en œuvre un test de Kolmogorov-Smirnov. A titre d'exemple alternatif ou complémentaire, la fonction de détection de données peut utiliser un modèle de données représentant des propriétés statistiques sur l'ensemble des données de calibration, et déterminer si une donnée est conforme à ces paramètres statistiques (suffisamment proche selon un critère de proximité prédéterminé). Ce modèle de données est par exemple obtenu par apprentissage, de préférence en utilisant les mêmes données de calibration que celles utilisées pour définir le modèle NUM. Si un tel modèle de données est utilisé, ce modèle de données est déployé par (ou dans) la puce.

Ainsi, selon un mode de réalisation, la puce CC comprend un tel que décrit ci-dessus. Comme indiqué ci-dessus, le modèle de données représente, ou est défini par ou comprend, des propriétés statistiques telles qu'une distribution, un écart type, une moyenne, etc, de l'ensemble ou d'un sous ensemble, des données de calibration.

Lorsque la puce CC détecte que des données data1 s'écartent des données de calibration, ou, dit autrement, lorsque la puce CC détecte une dérive des données data1 par rapport aux données de calibration, la puce CC est configurée pour enregistrer des informations relatives à cette détection positive d'une dérive de données.

En particulier, la puce CC enregistre, dans une deuxième zone de sa mémoire non-volatile, les résultats de la détection, par exemple sous la forme de données datalogdet compressées ou non, comprenant des métadonnées ou non, ces données datalogdet n'étant pas représentées en figure 3. Ces données datalogdet sont par exemple similaires aux données datalog du système 1.

Par ailleurs, afin de pouvoir procéder à une analyse future des données data1 ayant provoqué la détection qu'une dérive de données s'est produite, la puce CC est configurée pour enregistrer des données datadet représentative de ces données data1 ayant dérivé par rapport aux données de calibration. Par exemple, les données datadet sont les données data1 qui ont dérivé par rapport aux données de calibration, et qui ont été compressées ou non, et auxquelles ont pu être ajoutées des métadonnées.

Ainsi, lorsque la puce CC embarque le modèle de données, les données datadet et/ou datalogdet correspondant à une détection de dérive de données peuvent être utilisées pour redéfinir (ou recalibrer) le modèle de données ou pour raffiner la définition du modèle de données, par exemple par entrainement ("learning" en anglais) ou par apprentissage incrémental ("incremental learning" en anglais). A titre d'exemple, cette redéfinition ou ce raffinement du modèle de données peut être mis en œuvre in situ, par la puce CC elle-même, par exemple de manière automatique.

Afin de mettre en œuvre les fonctions Fct d'enregistrement des données data1 dans le tampon circulaire, de détection de dérive de données, et d'enregistrement des événements d'intérêt, c'est à dire des données datalogdet et datadet lorsqu'une dérive de données est détectée, la puce CC comprend une interface de programmation 304 permettant de programmer ces fonctions Fct dans la puce CC.

Selon un mode de réalisation, lorsque la puce CC détecte une dérive de données, la puce CC met en œuvre en œuvre une fonction Fct optionnelle de suppression de données non conformes. Les données data1b qui sont fournies au circuit CTRL sont alors déterminées par la puce CC, à partir des données data1 reçues par l'interface 300 dans lesquelles ont été supprimées les données data1 ayant dérivé par rapport aux données de calibration. Dit autrement, les données data1b sont déterminées uniquement par des données data1 ne s'écartant pas des données de calibration, c'est à dire que les données data1b sont déterminées uniquement par des données data1 conformes aux données de calibration. Le circuit CTRL fournit alors au modèle NUM des données data2 déterminées par des données data1b dans lesquelles les dérives de données ont été supprimées. Il en résulte que les données de sortie du modèle NUM sont plus fiables que si les données data2 avaient été déterminées par des données data1b elles-mêmes déterminées par des données data1 comprenant des données data1 ayant dérivé.

De manière alternative, plutôt que de supprimer les données data1 non conformes aux données de calibration pour produire les données data1b, la puce CC peut être configurée pour mettre en œuvre une fonction optionnelle Fct d'avertissement du circuit CTRL. Dans ce cas, les données data1b sont produite par la puce CC à partir de l'ensemble des données data1 reçues, mais la puce CC est configurée pour avertir le circuit CTRL via un signal IT, par exemple un signal d'interruption (ou d'information ou d'alarme), lorsque les données data1b qu'il est train de recevoir correspondent à des données data1 (ou ont été produites à partir de données data1) ayant dérivé par rapport aux données de calibration. Cela permet, par exemple, au circuit CTRL de produire les données data2 fournies au modèle NUM en ne prenant pas en compte les données data1b issues de données data1 non conformes aux données de calibration, et donc d'augmenter la fiabilité des données de sortie du modèle NUM. A titre d'exemple alternatif, cela permet au circuit CTRL de ne pas tenir compte des résultats du modèle NUM résultant de la fourniture de données data2 au modèle NUM dans le cas où ces données data2 correspondent à des données data1b correspondant elle-même à des données data1 ayant dérivé par rapport aux données de calibration, ou, dit autrement, dans le cas où ces données data2 sont déterminées à partir de données data1b déterminées à partir de données data1 ayant dérivé par rapport aux données de calibration. Dans l'exemple de la figure 3, la puce CC met en œuvre cette fonction d'avertissement du circuit CTRL et fournit donc le signal IT au circuit CTRL.

Selon encore une autre alternative, la puce CC met en œuvre une fonction Fct optionnelle de correction de données. Dans ce cas la puce est configurée pour appliquer une correction aux données data1 qui s'écartent des données de calibration, de sorte à produire des données data2 corrigées.

A noter que la puce CC peut aussi ne mettre en œuvre ni l'une ni l'autre des fonctions Fct optionnelles ci-dessus. Par ailleurs, lorsque la puce CC met en œuvre l'une ou l'autre des fonctions Fct optionnelles ci-dessus, celles-ci sont programmées dans la puce CC via son interface de programmation 304.

Par ailleurs, selon un mode de réalisation, la puce CC comprend une interface optionnelle 306 configurée pour recevoir du circuit CTRL des données de résultat datares produites suite à la fourniture des données data2 au modèle NUM, c'est à dire des données de résultat datares résultant de l'application du modèle NUM aux données de séries temporelles data2.

Dans un tel mode de réalisation, la puce CC peut mettre en œuvre une fonction optionnelle Fct de détection de dérive du modèle ("model drift" en anglais). La détection de dérive du modèle NUM consiste à détecter lorsque la précision des données de sortie du modèle NUM devient inférieure à un seuil en dessous duquel les résultats produit par le modèle NUM peuvent être erronés et conduire à de mauvaises décisions d'un circuit utilisant ces données de sortie. Dit autrement, la puce CC est alors configurée pour détecter une baisse de précision du modèle. La puce CC peut être configurée pour prévenir le circuit CTRL lorsque la précision du modèle NUM baisse, par exemple en dessous d'un seuil, par exemple avec un signal similaire au signal IT.

La détection de la baisse de précision du modèle NUM aurait pu être mise en œuvre par le circuit CTRL, toutefois cela aurait conduit à augmenter diminuer la quantité de ressources que le circuit CTRL peut allouer à d'autres tâches.

Un avantage de détecter une baisse de précision du modèle est qu'il est alors possible d'avertir un opérateur, un utilisateur ou un concepteur du système 3 que le modèle NUM n'est plus adapté à la surveillance de l'élément observé, et que le modèle NUM doit être redéfini avec de nouvelles données de calibration.

A cet effet, la puce CC peut être configurée pour enregistrer, dans sa mémoire non volatile, par exemple dans la troisième zone de sa mémoire non volatile, des données datadet déterminées par les données data1 ayant servi à générer les données data1b et data2 pour lesquelles une baisse de précision du modèle a été détectée. La puce CC peut également être configurée pour enregistrer dans sa mémoire non volatile, par exemple dans la deuxième zone de sa mémoire non volatile, des résultats de détection d'une baisse de précision du modèle sous la forme de données datalogdet.

Ainsi, l'opérateur, le concepteur ou l'utilisateur du système 3 pourra utiliser les données datalogdet et/ou datadet correspondant à une détection d'une baisse de précision du modèle NUM pour redéfinir (ou recalibrer) le modèle NUM ou pour raffiner la définition du modèle NUM, par exemple par entrainement ("learning" en anglais) ou par apprentissage incrémental ("incremental learning" en anglais).

La figure 4 représente, de manière schématique et sous la forme de blocs, un exemple d'une variante de réalisation du système embarqué 3 de la figure 3.

Le système embarqué 3 de la figure 4 comprend de nombreux éléments en commun avec le système embarqué 3 de la figure 3. Ainsi, sauf indication contraire, ce qui a été indiqué pour le système 3 de la figure 3 s'applique au système 3 de la figure 4. En particulier, seules les différences entre ces deux systèmes 3 sont ici mises en exergue.

Le système 3 de la figure 4 diffère de celui de la figure 3 en ce que le modèle NUM n'est pas déployé dans le circuit CTRL, mais dans un serveur SERV identique à celui de la figure 2. Le serveur SERV et le circuit CTRL sont donc en communication l'un avec l'autre pour que le circuit CTRL fournisse les données data2 au serveur SERV, qui les fournit à son tour au modèle NUM. Par ailleurs, des données datares résultant de la fourniture des données data2 au modèle NUM sont fournies par le serveur SERV au circuit CTRL, qui peut alors transmettre, de manière optionnelle, ces données datares à la puce CC, par exemple pour que la puce CC puisse mettre en oeuvre une détection de baisse de précision du modèle NUM. Dans le cas où le circuit CTRL transmet les données datares à la puce CC, celle-ci comprend l'interface 306 comme cela est illustré dans l'exemple de la figure 4.

Dans les systèmes 3 des figures 3 et 4, un avantage que la puce CC enregistre les données data1, datadet et datalogdet dans une mémoire non volatile est que ces données peuvent être récupérées par un opérateur, un utilisateur ou un concepteur du système 3, même si entre temps le circuit CTRL a été mis hors tension.

De préférence, la mémoire non volatile de la puce CC est configurée pour permettre un grand nombre de cycles d'écriture, par exemple pour mettre en œuvre le tampon circulaire où sont stockées les données data1. Par exemple, la mémoire non volatile de la puce CC, par exemple la technologie de cette mémoire non volatile, est choisie pour mettre en œuvre au moins 10⁷ cycles d'écriture, de préférence jusqu'à 10¹⁴ cycles d'écriture. Par exemple, la mémoire non volatile de la puce CC est une mémoire de type ferroélectrique (FeRAM de l'anglais "Ferroelectric RAM") ou de type magnétique (MRAM de l'anglais "Magnetic RAM"), ou, dit autrement, la mémoire non volatile est en technologie ferroélectrique ou magnétique.

Par ailleurs, bien que le circuit CTRL puisse comprendre une mémoire non volatile, la mémoire non volatile de la puce CC est en pratique bien plus grande en termes d'espace de stockage. Par exemple, la mémoire non volatile de la puce CC comprend au moins 32 Mbits de stockage, alors que circuit CTRL en comprend généralement moins, par exemple au moins deux fois moins. En effet, le circuit CTRL n'est pas conçu pour enregistrer un grand nombre de données de série temporelle, et c'est pour cela que, dans le système 1, une mémoire MEM externe au circuit CTRL est prévue pour que le circuit CTRL y enregistre les données data1.

En pratique, une grande partie de la mémoire non volatile de la puce CC est dédiée à la mise en œuvre du tampon circulaire, c'est à dire à l'enregistrement des données data1. Par exemple, au moins 60% de la mémoire non volatile est occupée par la première zone où sont enregistrées les données data1.

Selon un mode de réalisation, la puce CC, et, plus particulièrement sa mémoire non volatile où sont enregistrées les données data1, servent de mémoire de stockage de données pour le circuit CTRL, ce qui permet de supprimer la mémoire MEM dans le système 3 par rapport au système 1. Dit autrement, la mémoire non volatile de la puce CC des systèmes 3 décrits remplace la mémoire MEM des systèmes 1.

Selon un mode de réalisation, dans les systèmes 3 décrits ci-dessus, la puce CC est un circuit esclave du circuit CTRL.

Selon un mode de réalisation, dans les systèmes 3 décrits ci-dessus, la puce CC est un circuit maître pour chacun des capteurs S fournissant des données data1 à la puce CC.

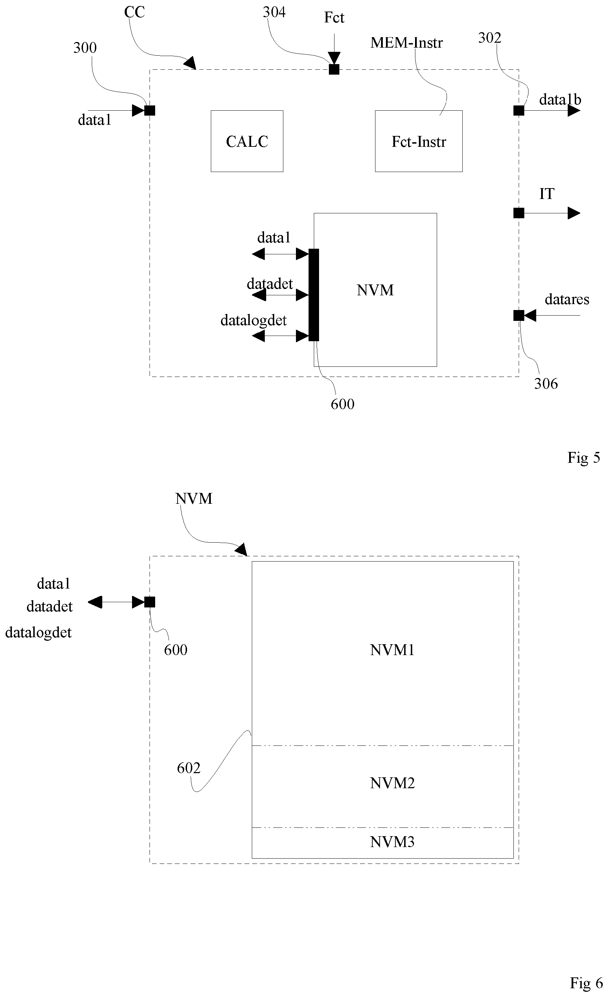

La figure 5 représente, de manière schématique et sous forme de blocs, un exemple de mode de réalisation de la puce CC du système 3.

La puce de circuit CC comprend, dans l'exemple de la figure 5, l'interface optionnelle 306 pour recevoir les données datares.

Dans l'exemple de la figure 5, la puce CC est configurée pour fournir le signal IT optionnel.

La puce CC comprend, comme cela a été décrit précédemment, une mémoire non volatile NVM permettant d'enregistrer les données data1, les données datalog et les données datalogdet.

La puce CC comprend un circuit de traitement et de calcul CALC, par exemple un circuit de calcul vectoriel et/ou scalaire, permettant de mettre en œuvre les traitements sur les données pour mettre en œuvre les fonctions Fct de la puce CC. Par exemple, le circuit CALC met en œuvre les calculs sur les données data1 permettant de détecter si les données data1 s'écartent des données de calibration. Par exemple, lorsque la puce CC est configurée pour détecter une baisse de précision du modèle NUM à partir des données datares, le circuit CALC met en œuvre les calculs sur les données datares permettant de détecter si la précision du modèle NUM a baissé.

La puce CC comprend en outre au moins une autre mémoire MEM-Instr configurée pour y enregistrer les instructions Fct-Instr des fonctions Fct programmées dans la puce CC via son interface de programmation 304. Les instructions Fct-Instr, lorsqu'elles sont lues par la puce CC, par exemple par son circuit CALC, entraînent la mise en œuvre des fonctions Fct programmées dans la puce CC.

Bien que cela ne soit pas représenté en figure 5, la puce CC comprend, par exemple, une mémoire de données autres que la mémoire NVM, utilisée pour y stocker des données produites et utilisées lors de l'exécution des fonctions Fct de la puce CC, par exemple des données intermédiaires produites lors de la mise en œuvre de la fonction de détection de dérive de données. Par exemple, la puce CC peut comprendre une mémoire SRAM dans laquelle sont stockées de manière temporaire les données data1 sur lesquelles est en train d'être appliquée la fonction de détection de dérive de données. Cette mémoire SRAM peut également stocker de manière temporaire les données datares sur lesquelles est en train d'être appliquée la fonction de détection de dérive de modèle.

Bien que cela ne soit pas représenté en figure 5, la puce CC comprend, par exemple, un circuit d'accès direct en mémoire permettant la gestion des flux de données à l'intérieur de la puce CC.

Plus généralement, la puce CC pourra comprendre des circuits non illustrés en figure 5 et qui servent à la mise en œuvre des diverses fonctions Fct de la puce CC. Par exemple, la puce CC peut comprendre un circuit de calcul configuré pour mettre en œuvre des calculs sur les données stockées dans une mémoire de la puce CC, par exemple dans la mémoire SRAM de la puce CC. Le circuit de calcul comprend par exemple un cœur de calcul, ou processeur, par exemple de type RISC-V, ainsi qu'une mémoire intelligente ("smart memory" en anglais) permettant de mettre en œuvre une fonction de calcul proche de la mémoire ("near memory computing" en anglais) ou une fonction de calcul en mémoire ("in memory computing" en anglais) sur ces données, par exemple de sorte à détecter des événements d'intérêt, comme par exemple une dérive de données ou une dérive de modèle.

Dans cet exemple, les deux unités de calcul que sont le processeur et la mémoire intelligente peuvent réaliser des calculs en parallèle avec une répartition entre elles permettant de maximiser l'efficacité énergétique. On pourra ainsi privilégier de réaliser dans la mémoire intelligente les calculs simples et vectoriels, notamment sur des grands mots, ou une suite de mots consécutifs ayant peu de dépendance entre eux et de réaliser via le processeur les calculs plus complexes sur des mots de la taille du bus système (en général 32, 16 ou 8 bits) ayant une forte dépendance avec les résultats des calculs précédents l'opération concernée.

Avantageusement, la puce CC est prévue pour mettre en œuvre des instructions définies dans une architecture de définition d'instructions (ISA de l'anglais "Instruction Set Architecture"). Les instructions possibles visent par exemple à permettre la répartition des opérations de calcul dans le circuit de calcul selon la stratégie d'optimisation énergétique susmentionnée.

Selon un mode de réalisation, tout ou partie des diverses fonctions Fct que la puce CC peut réaliser sont mises en œuvre par la puce CC soit par exécution d'un programme correspondant à une fonction donnée, par exemple par le processeur, soit par activation d'un circuit dédié à la réalisation d'une fonction donnée, par exemple un circuit implémentant une machine d'état finie (FSM de l'anglais "Finite State Machine"). L'utilisation d'une mémoire intelligente pour la réalisation de tout ou partie d'une fonction proposée est également possible.

Avantageusement, la puce CC comprend des circuits dédiés et/ou un ensemble de programmes préalablement chargés en mémoire par le fabricant de la puce CC, préalablement à son utilisation par l'utilisateur final. De tels programmes préchargés peuvent être éventuellement verrouillés par le fabricant pour des raisons de fiabilité, de sécurité, mais également pour permettre à la puce CC d'être rapidement opérationnelle et facilement installée dans l'application de l'utilisateur.

Dans ce cas, un utilisateur peut définir l'usage particulier souhaité de la puce CC ayant des fonctions génériques prédéfinies par exemple en sélectionnant les fonctions souhaitées par exemple au moyen d'une écriture dans un registre de configuration de la puce CC, ou au moyen d'un chargement d'un programme dans la puce CC appelant des fonctions prédéfinies et par exemple accessibles en se référant à l'ISA. Le chargement d'un tel programme de personnalisation de la puce CC peut être chargé à travers une interface propre ou via l'interface de connexion avec le contrôleur hôte. Ce programme de personnalisation peut être exécuté par le processeur de la puce CC pour réaliser les fonctions Fct. Le processeur peut également tenir compte des registres de configuration pour exécuter un programme permettant de réaliser les fonctions Fct.

Alternativement, ou en complément, tout ou partie des fonctions Fct peuvent être programmées par l'utilisateur, sans faire appel à des sous-programmes prédéfinis, via un programme chargé dans la puce CC et exécuté par le processeur de la puce CC.

La figure 6 représente, de manière schématique et sous forme de blocs, un exemple de mode de réalisation d'une mémoire non volatile NVM.

La mémoire NVM comprend une interface 600 configurée pour recevoir les données data1, datalog et datalogdet à enregistrer dans la mémoire NVM. Cette interface 600 permet également un accès en lecture aux données qui sont enregistrées dans la mémoire NVM, par exemple pour qu'un opérateur, un utilisateur ou un concepteur du système 3 puisse venir lire ces données data1, datalog et datalogdet.

La mémoire NVM comprend un espace de stockage 602 de données où les données data1, datalog et datalogdet reçues sont enregistrées.

L'espace de stockage 602 comprend au moins une première zone NVM1, une deuxième zone NVM2, et une troisième zone NVM3.

Les données data1 sont enregistrées dans la zone NVM1, dans un tampon circulaire mis en œuvre dans cette zone NVM1. De préférence, la zone NVM1 correspond à au moins 60% de l'espace de stockage disponible dans la mémoire NVM.

Les données datalogdet sont enregistrées dans la zone NVM2, les données datadet étant enregistrées dans la zone NVM3.

La puce CC décrite ci-dessus en relation avec les figures 3 à 6 peut être configurées pour mettre en œuvre des fonctions Fct optionnelles supplémentaires. Ces fonctions Fct sont programmées dans la puce CC via son interface 304.

Selon un mode de réalisation, la puce CC est configurée pour mettre en œuvre une fonction Fct optionnelle de reproduction de conditions réelles de fonctionnement. Cette fonction est utilisée alors qu'aucun capteur CC n'est connecté à la puce CC, c'est à dire alors que la puce CC ne reçoit aucune donnée data1. Lors de la mise en œuvre de cette fonction de reproduction de conditions réelles, la puce CC contient des données data1 enregistrées dans sa mémoire NVM, qui peuvent être des données data1 reçues par la puce CC quand un ou plusieurs capteurs S étaient connectés à la puce CC et/ou des données data1 programmées dans la mémoire NVM par un opérateur, un utilisateur ou un concepteur du système 3. Ces données data1 servent alors de données de série temporelles de test. La puce CC est configurée pour produire des données data1b correspondant à ces données de test data1, et les transmettre au circuit CTRL. Cela permet de tester le fonctionnement du système 3, et en particulier du contrôleur CTRL et du modèle NUM, alors qu'aucun capteur S n'est connecté au système 3. Par exemple, cela permet de tester le fonctionnement du système 3 avant son déploiement dans des conditions réelles de fonctionnement.

Selon un mode de réalisation alternatif ou complémentaire du mode de réalisation ci-dessus, la puce CC est configurée pour mettre en œuvre la fonction Fct optionnelle de reproduction de conditions réelles de fonctionnement en produisant des données de test data1b à partir du modèle de données précédemment décrit, par exemple en générant des données data1b conformes aux propriétés statistiques de l'ensemble des données de calibration.

Selon un mode de réalisation, lorsque la puce CC est configurée pour recevoir des données data1 en provenance de plusieurs capteurs, la puce CC peut mettre en œuvre une fonction Fct optionnelle de fusion des flux de données data1 provenant de ces capteurs, pour générer un seul flux de données data1b à partir d'au moins deux flux de données data1 provenant d'au moins deux capteurs S, par exemple pour générer un seul flux de données data1b plus fiables que si les données data1b n'étaient générées qu'à partir des données data1 d'un seul capteur S.

Selon un mode de réalisation, lorsque la puce CC est configurée pour recevoir des données data1 en provenance de plusieurs capteurs, la puce CC peut mettre en œuvre une fonction Fct optionnelle de routage ou de multiplexage des flux de données data1 reçus, pour permettre à un circuit CTRL d'être couplé à plusieurs capteurs S via un nombre limité d'interfaces de communication.

Selon un mode de réalisation, la puce CC est configurée pour mettre en œuvre une fonction Fct optionnelle d'analyse et/ou de détection de phénomènes transitoires sur les valeurs des données data1 reçues par la puce CC et/ou des valeurs des données data1b fournies au contrôleur CTRL. Dans ce cas la puce CC est configurée pour suréchantillonner les valeurs des données data1 reçues par son interface 300 par rapport à une fréquence de transmission de ces données et/ou pour suréchantillonner des valeurs des données data1b par rapport à une fréquence de transmission des données data1b. La puce CC enregistre alors, par exemple dans la mémoire non volatile NVM, les valeurs obtenues lors du suréchantillonnage lorsque ces valeurs présentent un phénomène transitoire non attendu.

Selon un mode de réalisation, la puce CC est configurée pour mettre en œuvre une fonction Fct optionnelle d'analyse et/ou de détection de phénomènes transitoires sur des signaux reçus par la première interface, par exemple des signaux utilisés dans les protocoles de transmission des données data1 à l'interface 300, par rapport à des changements rapides de valeurs de tensions qualifiées d'analogiques sur des signaux numériques (variations pouvant être supérieures à la tension d'alimentation, par exemple 3,3 V) détectés par des circuits analogiques, ou par rapport à une fréquence d'un signal périodique de synchronisation de l'interface 300, ou, dit autrement, par rapport à la fréquence d'un signal périodique d'horloge d'un protocole de transmission des données data1. La puce est en outre configurée pour enregistrer, par exemple dans la mémoire NVM, des échantillons correspondant à un phénomène transitoire du protocole de communication utilisé par l'interface pour recevoir les données data1.

Selon un mode de réalisation, la puce CC est configurée pour mettre en œuvre une fonction Fct optionnelle de test caché d'un modèle numérique. Pour cela, un modèle numérique supplémentaire d'au moins un élément observé par le système 3 est déployé (enregistré) dans la puce CC. La puce est alors configurée pour fournir, par exemple lorsqu'elle n'est pas en train de recevoir des données data1 sur son interface 300 et d'émettre des données data1b avec son interface 302, au moins une partie des données data1b, voire, de préférence, des données data2 correspondant à ces données data1b, au modèle numérique supplémentaire. Cela permet de tester in-situ le modèle numérique supplémentaire sans modifier le fonctionnement du système 3.

Dans les exemples de systèmes 3 décrits précédemment, chaque système ne comprend qu'un seul capteur S, ou, dit autrement n'est connecté qu'à un seul capteur lorsque l'on considère que ce capteur est externe au système 3. Toutefois, comme cela a été évoqué précédemment, l'interface 300 de la puce CC peut être configurée pour recevoir des données data1 provenant de plusieurs capteurs S, considérés comme faisant partie du système 3 ou comme étant externes au système 3.

En particulier, dans le cas où la puce CC est connectée à plusieurs capteurs S via son interface 300, ces capteurs S peuvent être dédiés à la surveillance de plusieurs éléments différents.

Par ailleurs, un mode de réalisation prévoit un logiciel permettant à un concepteur, à un utilisateur, ou à un opérateur du système 3 de programmer les fonctions Fct dans la puce CC. Il est ainsi prévu un produit programme d'ordinateur (ou programme informatique) comprenant des instructions qui, lorsque le programme est exécuté par un ordinateur, conduisent à la programmation, dans la puce CC, des fonctions mises en œuvre par la puce CC une fois implémentée dans le système 3, cette programmation s'effectuant via l'interface de programmation 304 de la puce CC. Le programme d'ordinateur, lorsqu'il est exécuté, offre une interface utilisateur permettant d'aider à la configuration (définition) des fonctions Fct que la puce CC va mettre en œuvre, notamment en ce qui concerne les algorithmes de détection de dérive, puis de programmer ces fonctions dans la puce CC, par exemple dans sa mémoire d'instruction.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Puce de circuits intégrés (CC) comprenant :
une première interface (300) configurée pour recevoir des premières données de séries temporelles (data1) d'au moins un capteur (S) ;
une deuxième interface (302) configurée pour fournir des deuxièmes données de séries temporelles (data1b) à un circuit numérique configuré pour fournir des troisièmes données de séries temporelles (data2) à un modèle numérique (NUM) d'au moins un élément surveillé par ledit au moins un capteur (S) ; et
une mémoire non volatile (NVM),
dans laquelle :
les deuxièmes données de séries temporelles (data1b) sont déterminées par les premières données de séries temporelles (data1),
les troisièmes données de séries temporelles (data2) sont déterminées par les deuxièmes données de séries temporelles (data1b),
la puce de circuits intégrés est configurée pour mettre en œuvre :
- une fonction d'enregistrement des premières données de séries temporelles (data1) reçues pendant une fenêtre temporelle glissante dans une première zone mémoire (NVM1) de la mémoire non volatile,
- une fonction de détection que des premières données de séries temporelles (data1) s'écartent de données de séries temporelles de calibration utilisées pour définir le modèle numérique (NUM),
- une fonction d'enregistrement de résultats (datalog) de la fonction détection dans une deuxième zone mémoire (NVM2) de la mémoire non volatile, et
- une fonction d'enregistrement de quatrièmes données (datalogdet) dans une troisième zone mémoire (NVM3) de la mémoire non volatile, les quatrièmes données étant déterminées par des premières données de séries temporelles détectées comme s'écartant des données de séries temporelles de calibration ; et
la puce de circuits intégrés (CC) comprend une interface de programmation (304) des fonctions (Fct) de détection et d'enregistrement mises en œuvre par la puce de circuits intégrés.

2. Puce de circuits intégrés selon la revendication 1, dans laquelle la puce (CC) comprend un modèle de données déterminé par des propriétés statistiques sur l'ensemble ou un sous-ensemble des données de calibration.

3. Puce de circuits intégrés selon la revendication 2, dans laquelle la puce (CC) est configurée pour mettre en œuvre la fonction de détection en utilisant le modèle de données.

4. Puce de circuits intégrés selon l'une quelconque des revendications 1 à 3, dans laquelle la puce (CC) est un circuit maitre dudit au moins un capteur (S).

5. Puce de circuits intégrés selon l'une quelconque des revendications 1 à 4, dans laquelle la puce (CC) est un circuit esclave du circuit numérique (CTRL).

6. Puce de circuits intégrés selon l'une quelconque des revendications 1 à 5, dans laquelle la mémoire non volatile (NVM) met en œuvre une mémoire de données pour le circuit numérique (CTRL).

7. Puce de circuits intégrés selon l'une quelconque des revendications 1 à 6, dans laquelle :
- la puce de circuits intégrés (CC) est en outre configurée pour que les deuxièmes données de séries temporelles (data1b) soient déterminées uniquement par les premières données de séries temporelles (data1) qui ne s'écartent pas des données de séries temporelles de calibration ; ou
- la puce de circuits intégrés (CC) est en outre configurée pour avertir (IT) le circuit numérique (CTRL) lorsque les deuxièmes données de séries temporelles (data1b) sont déterminées par des premières données de séries temporelles (data1) s'écartant des données de séries temporelles de calibration.

8. Puce de circuits intégrés selon l'une quelconque des revendications 1 à 7, dans laquelle :
la puce de circuits intégrés (CC) est en outre configurée pour mettre en œuvre une fonction (Fct) consistant à fournir au circuit numérique (CTRL), dans un mode de test où la première interface (300) est déconnectée dudit au moins un capteur (S), des deuxièmes données de séries temporelles supplémentaires (data1b) déterminées par des données de séries temporelles de test enregistrées dans la mémoire non volatile (NVM) ; et
la puce de circuits intégrés (CC) est configurée pour que ladite fonction (Fct) soit programmée dans la puce de circuits intégrés via l'interface de programmation (304).

9. Puce de circuit intégrés selon la revendication 2 ou 3, dans laquelle la puce de circuits intégrés (CC) est en outre configurée pour mettre en œuvre une fonction (Fct) consistant à fournir au circuit numérique (CTRL), dans un mode de test où la première interface (300) est déconnectée dudit au moins un capteur (S), des deuxièmes données de séries temporelles supplémentaires (data1b) générées à partir du modèle de données ; et
la puce de circuits intégrés (CC) est configurée pour que ladite fonction (Fct) soit programmée dans la puce de circuits intégrés via l'interface de programmation (304).

10. Puce de circuit intégrés selon l'une quelconque des revendications 1 à 9, dans laquelle :
la puce de circuits intégrés (CC) est en outre configurée pour mettre en œuvre au moins l'une des fonctions (Fct) suivantes :
- suréchantillonner des valeurs des premières données de séries temporelles (data1) reçues par la première interface (300) par rapport à une fréquence de transmission des premières données et/ou suréchantillonner des valeurs des deuxièmes données de séries temporelles (data1b) fournies par la deuxième interface (302) par rapport à une fréquence de transmission des deuxièmes données, et enregistrer les valeurs obtenues lorsque ces valeurs présentent un phénomène transitoire ; et
- suréchantillonner des signaux numériques de la première interface (300) par rapport à une fréquence d'un signal périodique de synchronisation de la première interface (300) ou par rapport à des variations rapides de valeurs de tension analogiques desdits signaux numériques, et pour enregistrer des échantillons correspondant à un phénomène transitoire d'un protocole de communication de la première interface (300) avec ledit au moins un capteur (S), et
la puce de circuits intégrés (CC) est configurée pour que ladite au moins une fonction (Fct) soit programmée dans la puce de circuits intégrés via l'interface de programmation (304).

11. Puce de circuit intégrés selon l'une quelconque des revendications 1 à 10, dans laquelle :
la puce de circuits intégrés (CC) est en outre configurée pour mettre en œuvre au moins l'une des fonctions (Fct) suivantes :
- générer les deuxièmes données de séries temporelles (data1b) à partir de premières données de séries temporelles d'au moins deux capteurs (S) ; et
- fournir au moins une partie des deuxièmes données de séries temporelles (data1b) à un modèle numérique supplémentaire dudit au moins un élément (S), ledit modèle numérique supplémentaire étant enregistré dans ladite puce (NVM), et
la puce de circuits intégrés (CC) est configurée pour que ladite au moins une fonction (Fct) soit programmée dans la puce de circuits intégrés via l'interface de programmation (304).

12. Puce de circuits intégrés selon l'une quelconque des revendications 1 à 11, dans laquelle :
la puce de circuits intégrés (CC) comprend une interface (306) configurée pour recevoir du circuit numérique (CTRL) des données de résultat (datares) obtenues en fournissant les troisièmes données de séries temporelles (data2) au modèle numérique (NUM) ;
la puce de circuits intégrés (CC) est configurée pour détecter une baisse de précision du modèle (NUM) à partir des données de résultat (datares) ; et
la puce de circuits intégrés (CC) est configurée pour avertir le circuit numérique (NUM) lors de la détection d'une baisse de précision.

13. Puce de circuits intégrés selon l'une quelconque des revendications 1 à 12, dans laquelle :
la première zone mémoire (NVM1) comprend au moins 60% de l'espace de stockage de la mémoire non volatile (NVM) ; et/ou
la mémoire non volatile (NVM) est configurée pour mettre en œuvre au moins 10⁷ cycles d'écriture, de préférence jusqu'à 10¹⁴ cycles d'écriture ; et/ou
la mémoire non volatile (NVM) est de type ferroélectrique ou de type magnétique ; et/ou
la mémoire non volatile (NVM) comprend au moins 32 Mbits de stockage.

14. Système électronique (3) comprenant :
la puce de circuits intégrés (CC) selon l'une quelconque des revendications 1 à 13 ;
au moins un élément à observer ;
au moins un capteur (S) configuré pour observer ledit au moins un élément et pour fournir les premières données de séries temporelles (data1) à la première interface (300) de la puce (CC) ;
un circuit numérique (NUM) configuré pour recevoir les deuxièmes données de séries temporelles (data1b) et fournir les troisièmes données de séries temporelles (data2) au modèle numérique (NUM) dudit au moins un élément.

15. Système selon la revendication 12, dans lequel :
- le système (3) comprend en outre un serveur (SERV) dans lequel est enregistré le modèle numérique (NUM), le circuit numérique (CTRL) étant configuré pour fournir les troisièmes données de séries temporelles (data2) au serveur ; ou
- le modèle numérique (NUM) est enregistré dans le circuit numérique (CTRL), les troisièmes données de séries temporelles (data2) étant des données internes du circuit numérique.

16. Puce de circuits intégrés selon l'une quelconque des revendications 1 à 13, ou système selon la revendication 14 ou 15, dans lequel le modèle numérique est un jumeau numérique défini à partir des données de calibration ou un modèle obtenu par apprentissage à partir des données de calibration.

17. Produit programme d'ordinateur comprenant des instructions qui, lorsque le programme est exécuté par un ordinateur, conduisent à la programmation, dans la puce de circuits intégrés (CC) selon l'une quelconque des revendications 1 à 13, desdites fonctions (Fct) mises en œuvre par la puce, via l'interface de programmation (304) de ladite puce.
